(19) **Europäisches Patentamt / European Patent Office / Office européen des brevets**

(11) **EP 4 442 928 A1**

(12) # EUROPEAN PATENT APPLICATION

(43) Date of publication:
**09.10.2024 Bulletin 2024/41**

(21) Application number: **23166562.1**

(22) Date of filing: **04.04.2023**

(51) International Patent Classification (IPC):
**E04F 15/10** *(2006.01)* **B29C 44/32** *(2006.01)*
**B29C 70/86** *(2006.01)* **B29C 70/08** *(2006.01)*

(52) Cooperative Patent Classification (CPC):
**E04F 15/107; B29C 70/443; B29C 70/545;
B29D 24/00; E04F 15/102**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Unknown Nordic ApS
5400 Bogense (DK)**

(72) Inventor: **Bech Dalhoff Kristensen, Søren
8680 Ry (DK)**

(74) Representative: **Patrade A/S
Ceresbyen 75
8000 Aarhus C (DK)**

(54) **A BASALT-BASED PROFILE WITH POLYURETHANE COATING**

(57)    The present invention relates to a basalt-based profile (100) comprising at least one basalt-based fiber (110), a resin (120) and a coated layer of polyurethane coating (200). The profile preferably being a plank (300) for a terrace, a building-facade, a roofing, for a footbridge or being a building element (400), such as a wall, a roof, a floor, or being a board for insulating heat/sound. Furthermore, the invention relates to a method of manufacturing a basalt-based profile by providing basalt-based fiber, preferably from a coil (115), combining the basalt fiber with resin, preferably by immersion of the basalt-based fiber into a resin bath (125) or vacuum suction the resin into the fiber, inserting the fibers into a mould (145), heating the basalt-based fiber, pultruding, extruding, vacuum infusing, or additive manufacturing the basalt-based fiber, cutting the basalt-based fiber into a profile, coating the profile with polyurethane coating.

100:

FIG. 1

EP 4 442 928 A1

**Description**

**Field of the Invention**

The present invention relates to a basalt-based profile comprising at least one basalt-based fiber, a resin and a coated layer of polyurethane coating. The profile is preferably being a plank for a terrace, a floor, a building-facade, a roofing, a footbridge or being a building element, such as a wall, a roof, a ceiling, a floor or being a board for heat/sound insulation. Furthermore, the invention relates to a method of manufacturing a basalt-based profile.

**Background of the Invention**

The world calls for greener solutions, sustainable solutions and in particular economically viable solutions and products with longevity are requested.

Within the area of profiles, such as planks for a terrace, a floor, a building-facade, a roofing, a footbridge and/or building element and/or a board for heat/sound insulation, the need and request for sustainable longevity solutions is increasing.

Today, numerous solutions for profiles are available, however profiles - for various purposes - being both sustainable, economically viable and having longevity are not available.

For instance, when building a terrace or an outdoor floor, most people would today choose stone materials or wood material. Or, when choosing the material for a building-facade or a roofing, today most people would choose tiles for the roofing and bricks for a house facade or, if a greener solution is desired and/or required, wood material would probably be chosen.

Using wood material might in some contexts be considered as a sustainable choice, however wood material - and other alternative sustainable material - has a relatively short lifespan and further a significant need for maintenance, especially if the wood material is used for outdoor purposes, since wood material has a low resistance for environmental impact and likewise for chemical impact.

Also, the strength properties for wood material are relatively low, and furthermore, wood material changes its form and shape over time, making the maintenance challenging.

Even though wood might be considered as sustainable, the impact of the felling of woods, in particular hard wood from rainforest, has still very high negative consequences for the environment, therefore it would be highly preferred to refrain from felling as many woods as possible.

Furthermore, the use of concrete has a high negative impact on the environment, such as a very high degree of water-use, and therefore it would be highly preferred to refrain from using concrete as much as possible within the construction area.

Hence, an improved profile, preferably an efficient and reliable profile, suitable for being utilized as a plank, a board, a building material or the like would be advantageous, and in particular a more resistant, mechanically strong, economical and sustainable profile with longevity would be advantageous.

**Object of the Invention**

It is an object of the present invention to provide an alternative to the prior art.

In particular, it may be seen as an object of the present invention to provide a profile that solves the above-mentioned problems by being a resistant, mechanically strong, economical and sustainable profile with longevity, suitable for being utilized as a plank, a board, a building element or the like.

**Description of the Invention**

Thus, the above-described object and several other objects are intended to be obtained in a first aspect of the invention by providing a basalt-based profile comprising:

- at least one basalt-based fiber, preferably a plurality of basalt-based fibers,
- a resin, and
- a coated layer of polyurethane coating.

The invention is particularly, but not exclusively, advantageous for providing a sustainable profile.

Further, the invention provides a profile having excellent properties, among many, such properties might be:

- Excellent thermal properties

Basalt is known to be a material with the absolute best thermal properties. Basalt material has demonstrated exceptional heat absorption properties since the heat accumulates in the material and is only released when the surrounding temperature decreases to a lower temperature.

An example of the thermal properties of basalt, both leather and plastic achieved in a test approximately 60 degrees Celsius on a 30 degree hot summer day, whereas basalt only reached about 30-38 degrees.

The profile according to the invention will thus never become either icy or burning and is thereby a profile perfect to walk on, touch, etc.

- Excellent shape stability

The basalt material has a very low moisture absorption, which means that a profile based on basalt material will not expand or contract due to any impact and thus it would not cause any significant degree of stress tension in the profile.

- Resistance properties

The basalt material and the polyurethane coating have a unique resistance property, and notably resistance to chlorine and salt. The profile of the invention would therefore be excellent as a facing and covering for building in e.g. coastal areas or in spa bath and pool areas.

- Extreme longevity and durability

The basalt material is nearly indestructible and will have a really long lifetime. It will thus be a positive element in terms of sustainability, as the profile will have a lifespan of +30-50 years (almost certainly longer, probably infinite) without any kind of treatment or maintenance.

- Reusable opportunities

If the profile is to be destroyed after having served its purpose, it will be possible to reuse the basalt fibers by easily melting away the resin/glue and polyurethane.

- Lightweight

With a potential weight per $m^2$ of approx. 5-20 kg (sometimes less, sometimes more), this is an extremely lightweight profile. The profile can have a both lower and higher weight pr. $m^2$ since the weight obviously depends on the specific dimensions of the profile (W × L × H).

This will be a great advantage from a construction point of view, if the profile is considered to be used as either covering or cladding or the like, as it will enable easy handling of the profile.

Furthermore, if the profile is considered to be used for a plinth/footing construction, it will also entail a limited consumption of concrete.

Furthermore, an advantage of using the resin adhesive is that resin is an extremely strong and durable adhesive (glue). When applied, it quickly forms a very tight and strong bond. The resin adhesive will ensure that the profile is not shrinking or contracting due to temperature or humidity changes. Resin will moreover make the profile able to resist high levels of heat as well as a wide variety of chemicals.

Moreover, the polyurethane coating provides several advantages. The polyurethane coating layer applied to the surface of the basalt-based profile has the purpose of protecting it from various types of defects such as corrosion, weathering, abrasion and other deteriorating processes. Also, a polyurethane coating can be formulated to be glossy, muted, opaque or transparent. Other advantages properties of the polyurethane coating are the durability, the softness and the elasticity. The durability also makes them more resistant to abrasion and less prone to dents and scratches. The improved elasticity also means that polyurethane coated basalt-based fibers are able to maintain their shape and mechanical properties in most temperatures, low as high. Further, the coating makes the profile resistant to damage from UV rays. Also, the profile become moisture-resistant, and can be used in all types of applications, even underwater.

Also, is has been confirmed via countless of tests that polyurethane coating is unique when combined with basalt-based material compared to other coatings.

In the context of the present invention, a "profile" may be understood as a plank, an element, a board, a piece, a plate, a panel and anything the like. Thereby, the term "profile" should be understood broadly. There should be no specific restriction of the dimensions of the profile, however a profile in this context might be understood as being relatively thin/low in height compared to the length and depth/width and further having a flat top/bottom surface, though the top/bottom surface may comprise one or more exterior grooves.

In the context of the present invention, "basalt" may be understood as basalt fibers that are produced from basalt rocks by melting them and converting the melt into fibers. Basalts are rocks of igneous origin.

In the context of the present invention, a "resin" may be understood as any adhesive material made from synthetic polymer compounds, such as a glue.

In the context of the present invention, the "coated layer" may be understood such that the layer is applied to at least one surface, preferably more surfaces and/or sides, and in some embodiments the coating is covering the entire profile.

In one embodiment of the invention, the basalt-based fiber is a spun basalt-based fiber, preferably spun into a thread.

The embodiment is particularly, but not exclusively, advantageous for providing the basalt-based fiber in a form easy to handle and appropriate to use for manufacturing purposes.

In the context of the present invention, a "thread" may be understood as a yarn, a string, a wire, a twine or the like.

In one embodiment of the invention the spun basalt-based fiber comprises at least two or more types of material, wherein the one of the fibers are basalt fibers.

The embodiment is particularly, but not exclusively, advantageous for allowing the invention to combine the basalt fibers with at least one other type of material.

The second material might have different purposes such as, enhancing purpose, light-weight purpose, surface purpose, handling purpose, manufacturing purpose, etc.

In one embodiment of the invention, the basalt fibers are made from a spun basalt-based fiber comprising at least two or more types of material, wherein the first of the fibers is basalt fibers, and preferably the second material is enhancing fibers.

The embodiment is particularly, but not exclusively, advantageous for providing a combined material suitable for being used in a basalt-based profile, wherein the profile has the most optimal strength properties, and still being both sustainable and economical.

In one embodiment of the invention, at least one of the at least two types of fiber materials is one or more of:

- hemp fiber,
- kevlar fiber,
- carbon fiber,
- iron based, and/or
- glass fibers.

The embodiment is particularly, but not exclusively, advantageous for providing the opportunity of using a combined material to produce a basalt-based profile, wherein the properties of the profile can be adjusted, modified and tailored to the specific purpose of the basalt-based profile having specific properties.

In one embodiment of the invention, the basalt-based fiber and the at least one other material is a spun into a thread.

In one embodiment of the invention, the majority of the fibers are basalt-based fibers, preferably where 50 - 100% of the fibers are basalt fibers, more preferably where 75-100% of the fibers are basalt fibers, more preferably 90-100% of the fibers are basalt fibers, most preferably 95-100% of the fibers are basalt fibers.

The embodiment is particularly, but not exclusively, advantageous for providing a profile exploiting the unique opportunities of basalt material by making basalt at least the main material in the profile.

In one embodiment of the invention, the profile is made of 100% basalt-fibers.

The embodiment is particularly, but not exclusively, advantageous for providing a profile having excellent properties, among many, such properties are:

- Excellent thermal properties
- Exceptional shape stability
- Resistance properties
- Extreme longevity and durability
- Reusable opportunities
- Lightweight

In one embodiment of the invention:

- the thickness of the one or more basalt-based fibers are 100-4000 tex, and/or
- wherein the thickness of the one or more enhancing fibers are 100-4000 tex. 1 tex = 2,8 mm.

In one embodiment of the invention, the thickness of the coating is 0,5-3 mm, preferably 1,5-2,5 mm.

The embodiment is particularly, but not exclusively, advantageous for providing a coated profile with the optimal lifetime, the optimal properties and still using as little material as possible - thereby obtaining material saving advantages.

In one embodiment of the invention the basalt-based profile comprises at least one hollow portion, preferably an internal hollow portion, and more preferably a plurality of internal hollow portions.

The embodiment is particularly, but not exclusively, advantageous for providing a profile, wherein only the minimum amount of material is used to provide a profile with the desired/required properties. By saving as much material as possible, the profile is made even more sustainable.

Further, the less material used, the more lightweight will the profile become, and the easiness of handling and transporting the profile would increase.

Moreover, the cost of the profile might decrease due to the minimum need of material for producing the profile.

In one embodiment of the invention, the profile comprises at least one longitudinal hollow through-hole, preferably a plurality of through-holes, more preferably 2-6 through-holes, most preferably 4 through-holes.

The embodiment is particularly, but not exclusively, advantageous for proving a basalt-based profile using as less material as possible, still keeping the required properties of the basalt-based profile, and further making the manufacturing of the hollow sections most simple and obtainable.

In one embodiment of the invention, the hollow portion is fully or partly filled with any kind of material.

The embodiment is particularly, but not exclusively, advantageous for proving a basalt-based profile, wherein a material filled in the hollow portions provides a desired property to the profile.

The material filled into the hollow portion might be any kind of insulation.

Thereby the insulating properties, such as heat/sound, are increased.

The material filled into the hollow portion might be residual material from the production of the basalt-based profile, such as dust and/or cutting leftovers.

Thereby as much material as possible is utilized and further the insulating properties heat/sound is increased.

In one embodiment of the invention, the profile comprises at least one exterior groove, preferably a plurality of exterior grooves, and/or preferably one or more longitudinal exterior grooves.

The embodiment is particularly, but not exclusively, advantageous for providing a basalt-based profile having a non-slid, non-skid, skidproof surface, thereby making the profile suitable for being walked on, such as a profile being used for a terrace or floor purpose or the like.

Furthermore, the external grooves provide an optimized sound absorption property. Also, the grooves can be deep and wide and thereby replace the hollow sections and still providing material saving and more light-weighted profiles.

In the context of the present invention the "external grooves" may be understood as furrows, recesses, notches, etc.

It should also be understood that the shape, form and dimension of the grooves are suitable for being constructed so as to provide the desired properties for the profile. The grooves can be parallel, longitudinal, transverse, can be made in a pattern, can be positioned arbitrary, etc.

In one embodiment of the invention, the at least one external groove has a depth into the profile being at least half the hight of the profile.

The depth of the grooves can variate over the profile, preferably but not only when the profile has an inclining surface.

In one embodiment of the invention, the at least one external groove has a volume being at least 1/6 of the entire volume of the profile, preferably at least 1/4, more preferably the grooves have an even higher volume.

The embodiments are particularly, but not exclusively, advantageous for proving the external grooves being deep and wide and thereby replacing the need of hollow sections in the profile, but still saving material of the profile and making it more light-weighted.

In one embodiment of the invention, the profile comprises a not or a recess for allowing one or more profiles to be assembled, said not being positioned at least at one of the longitudinally sides of the profile,

preferably the profile further comprise:

- a protrusion at the opposite longitudinally side of the not,
- an associated assemble piece for assembling two profiles comprising a nod at the two longitudinally sides of the profile.

The embodiment is particularly, but not exclusively, advantageous for proving basalt-based profiles that can easily be connected to one another, and thereby providing the opportunity to assemble numerous profiles into a big area of basalt-based profiles. Furthermore, the profiles allow different types of assembling means, and thereby provide a variety of opportunities for the use of the profiles.

In the context of the present invention, a "not" may be understood as groove or the like. In the context of the present invention, a "protrusion" may be understood as fer or tongue or the like.

It should be understood that the not/groove/etc. and the protrusion/fer/tongue/etc. enable one embodiment of an assembling of two or more basalt-based profiles.

In the context of the present invention, an "assemble piece" may be understood as any piece, item, part, slice, etc. that enables assembling at least two basalt-based profiles, where the side of the profiles being assembled to each other has nots/grooves, such that the assemble piece connects the two profiles via the nots.

The assemble piece could be made in any material and have a variety of shapes and dimensions.

In the context of the present invention, "assemble / assembling" may be understood as providing an assembling of at least two profiles, wherein the assembling can be both a fixed assembling or a disconnectable assembling.

In one embodiment of the invention, at least one surface, preferably the top surface, is inclining.

The embodiment is particularly, but not exclusively, advantageous for providing a profile suitable for water drainage, if used for such as a terrace or floor purpose.

In one embodiment of the invention, the profile at least has the properties:

- chemical resistance being in class C3, C4, C5-I or C5-M,
- tension resistance border lengthwise being at least 300 MPa, preferably 370-400 MPa,
- tension resistance border crosswise being at least 40 MPa, preferably 50-60 MPa,
- elastic modules being at least 25 GPa, preferably 30-35 GPa,
- density being 1.8-2.1 kg/m$^3$, preferably 1.95 kg/m$^3$,
- basalt amount in mass being 50-100%, preferably 65-75%,
- weight being 2-10 kg/m$^2$,
- load being 200-550 kg/m$^3$, preferably 500 kg/m$^2$.

The embodiment is particularly, but not exclusively, advantageous for providing a basalt-based profile providing a unique number of excellent properties.

In one embodiment of the invention the coating at least has the properties:

- hardness being 60-95 HB, preferably 88-90 HB,
- density being 65-75, preferably 70 kg/m$^3$,
- tensile strength being minimum 15.8 MPa,
- abrasion resistance being maximum 0.3% per 1000 cycles,
- elongation being minimum 125%,
- tear strength being minimum 400 pli,
- moisture vapor transmission being 0.025-0.030 MILS.

The embodiment is particularly, but not exclusively, advantageous for providing a basalt-based profile with a unique coating providing excellent properties.

In one embodiment of the invention, the profile is a plank, such as a plank for a terrace, for a building-facade, a roofing and/or for a footbridge,

wherein said plank preferably has the dimension:

-

W: 10-40 cm x H: 0,5-4 cm x L: 1-3000 cm.

The embodiment is particularly, but not exclusively, advantageous for providing a basalt-based profile being manufacturable in a variety of required/desired dimensions. The profile has properties allowing the profiles being made in a length of at least 30 meters, and even longer, thereby decreasing the amount of assembling-joints / connections-joint in at least one direction.

In one embodiment, the basalt-based the profile is a building element for the construction of a building, such as being a wall element, a roof element, a ceiling element, a floor element or an insulation element, wherein said building element preferably has the dimension:

-

W: 25-150 cm x H: 0,5-20 cm x L: 1-3000 cm.

The embodiment is particularly, but not exclusively, advantageous for providing a basalt-based profile being a building element optimal for using in a building construction. The strength properties of the basalt-based profile are so optimal and robust that concrete, bricks and/or tiles might be replaced with the basalt-based profiles. Since basalt also have unique properties for the use for heat and/or sound insulation, the profiles might also be used as insulation.

In context of the present invention, "building element" may be understood as element for building a construction. The basalt-based profiles are suitable for replacing numerous of today's building elements, among many examples are concrete elements, roofing/tiles, facades/bricks, floor constructions, insulation elements, etc.

In context of the present invention, "heat insulation" may be understood as heat insolation, lagging or the like. Further, it may be understood that by the definition of "heat insulation", cooling is also included in this. The basalt-based profiles are both heating and cooling insulating, since it is regulative to the temperature depending on whether the surrounding is cold or warm.

In one embodiment of the invention, the profile is a board for insulating heat and/or sound, such as a board for wall heat and/or sound insulation and/or ceiling heat and/or sound insulation and/or floor heat and/or sound insulation, wherein said board preferably has the dimension:

-

W: 25-150 cm x H: 0,5-4 cm x L: 1-3000 cm.

The embodiment is particularly, but not exclusively, advantageous for providing a board with unique insulating properties, both heat/cold and sound insulation, and thereby usable in many purposes.

In one embodiment of the invention, an additive manufacturing process is used to produce the basalt-based profile.

The embodiment is particularly, but not exclusively, advantageous for providing a basalt-based profile being manufactured simply and automatically.

In a second aspect, the invention further relates to a method of manufacturing a basalt-based profile, wherein the method comprises the steps:

- providing basalt-based fiber, preferably from a coil,
- combining the basalt fiber with resin, preferably by immersion of the basalt-based fiber into a resin bath or vacuum suction the resin into the fiber,
- inserting the fibers into a mould,
- heating the basalt-based fiber, preferably in an oven or a heating-mould,
- pultruding, extruding, vacuum infusing or additive manufacturing the basalt-based fiber,
- cutting the basalt-based fiber into a profile,
- coating the profile with polyurethane coating,

wherein the steps of the method can be executed in any order and/or executed simultaneously.

The second aspect of the invention is particularly, but not exclusively, advantageous for providing a manufacturing method for basalt-based profiles, wherein the manufacturing method provides the opportunities to produce all the alternative variations and versions of a basalt-based profile within the invention.

By providing a basalt-based fiber, preferably from a coil, the basalt-based fiber is available in an easy-handling manner.

By combining the basalt fiber with resin, preferably by immersion of the basalt-based fiber into a resin bath or vacuum suction the resin into the fiber, the resin is combined with the fibers by the most optimal procedure, such that both the basalt and the resin keep their properties.

In one embodiment of the invention, the method further comprises the step of:

- Providing a second non-basalt fiber material, preferably from a coil.

The embodiment is particularly, but not exclusively, advantageous for providing a manufacturing method wherein more than one fiber material can be used to produce a basalt-based profile with the most optimal properties.

In one embodiment of the invention, the coating of the profile is applied at a pressure at 2000-2400 PSI, most preferably at a pressure about 2200 PSI.

The embodiment is particularly, but not exclusively, advantageous for providing an optimal manufacturing process.

In one embodiment of the invention, the coating of the profile is applied at a temperature at 50-100 degrees, more preferably at a temperature about 70-74 degrees, most preferably at a temperature of 72 degrees.

The embodiment is particularly, but not exclusively, advantageous for providing an optimal manufacturing process.

The first and second aspect of the present invention may each be combined with any of the other aspects. These and other aspects of the invention will be apparent from and elucidated with reference to the embodiments described hereinafter. Embodiments from the product should be seen as applicable to the method, and embodiments from the method should be seen as applicable for the product.

## Description of the Drawing

Figure 1 illustrates a 3D drawing from an end of the basalt-based profile.
Figure 2 illustrates a 3D cross-section of the basalt-based profile.
Figure 3 illustrates a 3D drawing from the side of a basalt-based profile.
Figure 4 illustrates a 3D drawing from the side/top of a basalt-based profile.
Figure 5 illustrates an embodiment with external grooves at one surface.
Figure 6 illustrates a cross-section of an embodiment with external grooves.
Figure 7 illustrates a 3D drawing of profile with external grooves at one surface.
Figure 8 illustrates one connection/assembling opportunity.
Figure 9 illustrates a cross-section of a hollow profile with a not and a protrusion.
Figure 10 illustrates a 3D drawing of a hollow profile with a not and a protrusion.
Figure 11 illustrates a hollow profile with a not and a protrusion.
Figure 12 illustrates a connection of two profiles with not and protrusion.
Figure 13 illustrates an end of a basalt-based profile with a protrusion.
Figure 14 illustrates an end of a basalt-based profile with a not.
Figure 15 illustrates a picture of a real-life basalt-based profile.
Figure 16 illustrates an example of dimensions of a profile.
Figure 17a-c illustrate simplified versions of the profile with different coating layers.
Figure 18 illustrates an example of a method for producing a basalt-based profile.

## Detailed Description of the Invention

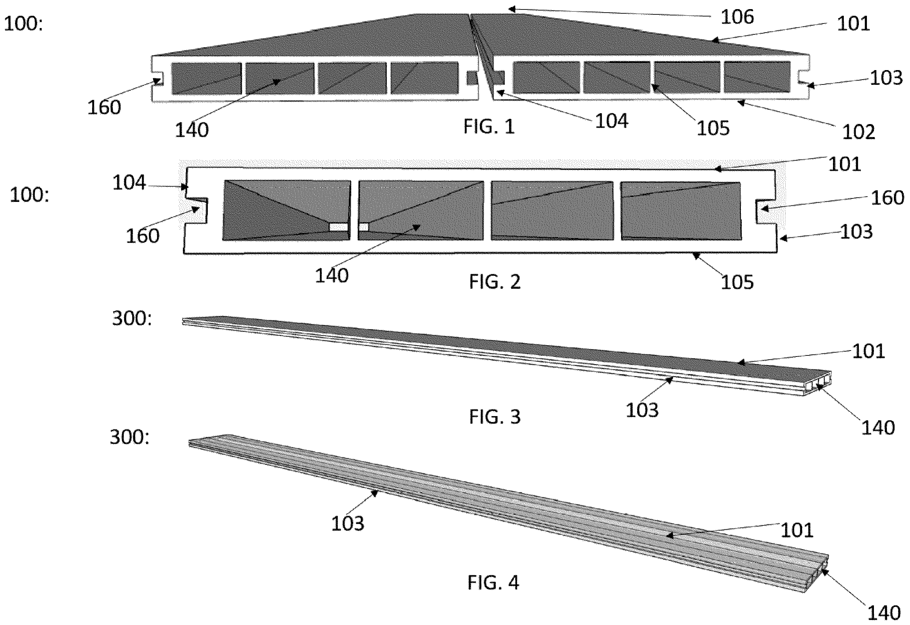

FIG. 1 illustrates a 3D drawing from an end of the basalt-based profile 100.

The basalt-based profile within the context of the invention comprises:

- a top surface 101,
- a button surface 102,
- two sides - a first side 103 and a second side 104, and
- two ends - a first end 105 and a second end 106.

The profile further comprising:

- at least one basalt-based fiber 110, preferably a plurality of basalt-based fibers,
- a resin 120, and
- a coated layer of polyurethane coating 200.

The basalt-based fiber 110 is preferred to be a spun basalt-based fiber, preferably spun into a thread 117. The spun basalt-based fiber might comprise at least two or more types of material, wherein the one of the fibers is basalt fibers 110. The second type of fiber materials 130 is preferably one or more of: hemp fiber, kevlar fiber, carbon fiber, iron based, and/or glass fibers (not shown).

Also, the majority of the fibers are basalt-based fibers 110, preferably where 50- 100% of the fibers are basalt fibers, more preferably where 75-100% of the fibers are basalt fibers, more preferably 90-100% of the fibers are basalt fibers, most preferably 95-100% of the fibers are basalt fibers 110 (not shown).

In FIG. 1 is moreover illustrated a basalt-based profile, wherein the profile comprises at least one internal hollow portion 140, preferably a plurality of internal hollow portions. The specific embodiment illustrated comprises four longitudinal hollow through-holes 140. However, there could be any number of through holes, or there could be none.

Furthermore, a profile is illustrated comprising a not 160 at each side, both first and second.

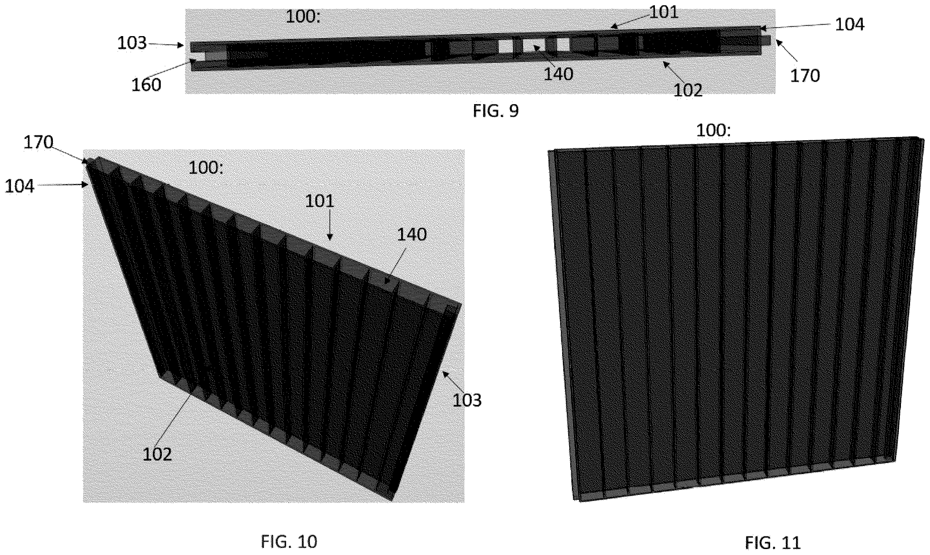

This is one embodiment of the invention, however this is not limiting since, the profile might also comprise only one not 160 (see FIG. 9-14). The not 160 is suitable for allowing one or more profiles to be assembled, said not being positioned at least at one of the longitudinally sides 103, 104 of the profile 100.

Within the context of the invention, the profile 100 further comprises an associated assemble piece 180 for assembling two profiles comprising a not 160 at the two longitudinally sides 103, 104 of the profile (not shown).

FIG 2 illustrates a 3D cross-section of the basalt-based profile 100 corresponding to the profile described under FIG. 1.

FIG. 3 and FIG. 4 illustrate 3D drawings from the side 103 /top 101 of a basalt-based profile.

The profile is suitable for being a plank 300, such as a plank for a terrace, or a floor, for a building-facade, a roofing and/or for a footbridge, wherein said plank preferably has the dimensions:

$$W: 10\text{-}40\ cm \times H: 0,5\text{-}4\ cm \times L: 1\text{-}3000\ cm.$$

- W = Width
- H = Height
- L = Length

These dimensions should not be seen as limiting for the invention but should only be seen as one embodiment for a profile being a plank 300.

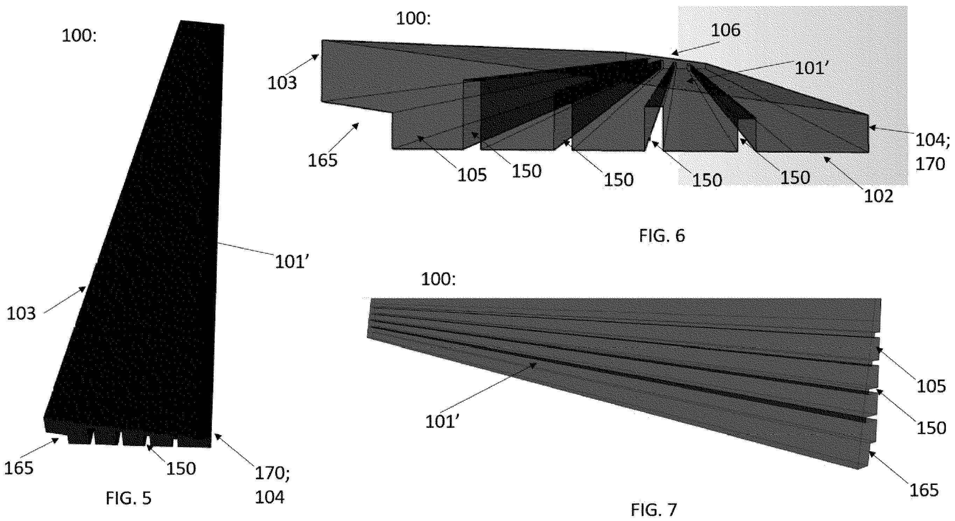

FIG. 5 illustrates a unique embodiment of a basalt-based profile 100 with external grooves 150 at one surface 102. The external grooves 150 illustrated are deep and wide making it convenient not to have hollow sections 140 in the profile, but still saving material of the profile 100 and making it more light-weight.

The profile has at least one inclining surface 101'. In the embodiment illustrated in FIG. 5, the inclined surface is the top surface 101, and the bottom surface 102 comprises the external grooves 150. The grooves illustrated have different deepness, the grooves 150 could also have had the same deepness into the profile 100.

As illustrated in FIG. 5, the deepness follows the inclined top surface 101' such that the distance from the end of the grooves 150 to the top surface 101 is substantially the same for all the grooves of the profile 100.

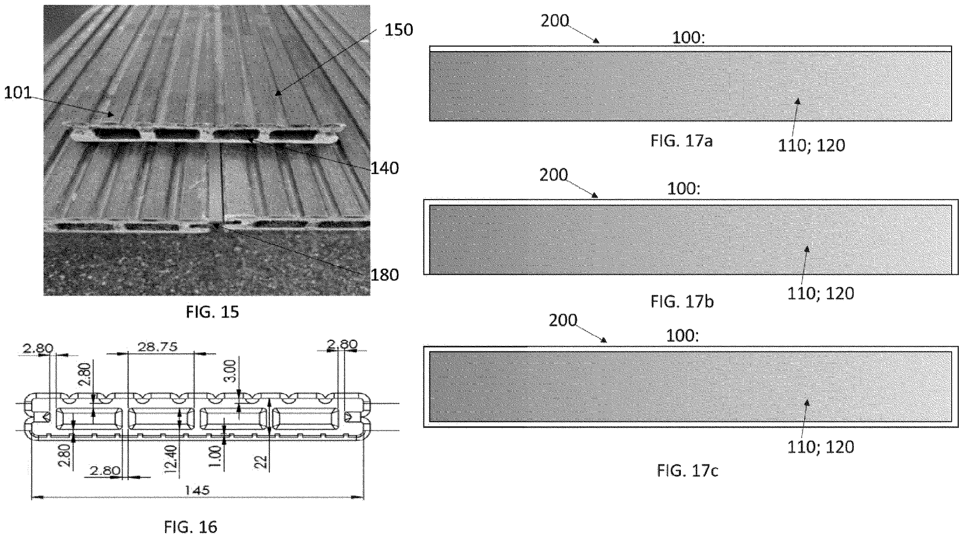

The grooves 150 illustrated in FIG. 5 are very deep and very wide and made one the bottom surface 102. It should be understood that smaller grooves made on the top surface 101' are also preferred within the invention, such as for making the profile non-slid (see FIG. 15). The grooves 150 should not be seen as limiting for the invention, neither should the number of the grooves or the dimensions or shape of the grooves. The basalt-based profile 100 might comprise at least one exterior groove 150, preferably a plurality of exterior grooves and/or preferably one or more longitudinal exterior grooves, or it might not comprise any grooves.

Furthermore, the profile in FIG. 5 illustrates a profile with an open not / a recess 165 at a first side 103 and wherein the second side 104 is / act as a protrusion 170 itself.

FIG. 6 illustrates a cross-section of an embodiment with external grooves 150 comparable with the profile 100 described under FIG. 5.

FIG. 7 illustrates a 3D drawing of profile 100 with external grooves 150 at the top surface 101 comparable with the profile described under FIG. 5.

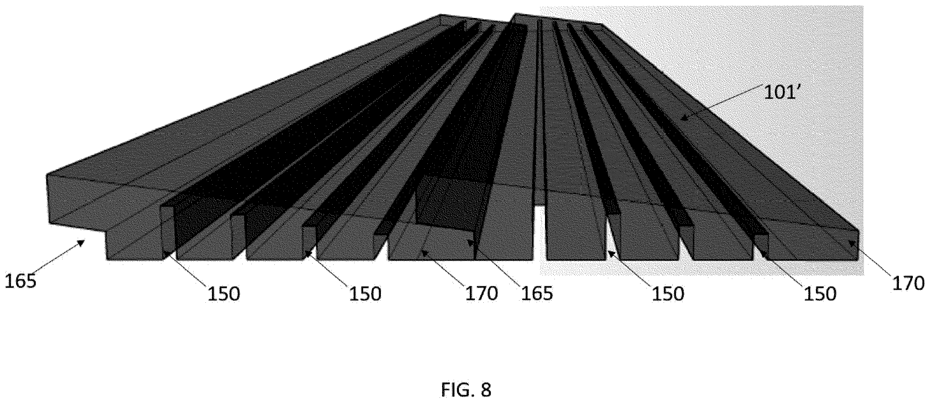

FIG. 8 illustrates one connection/assembling opportunity, where two inclined 101' profiles 100 are connected via an open not / a recess 165 at the first side 103 and wherein the second side 104 is / act as a protrusion 170 itself fitting into an open not / a recess 165 of another profile.

FIG. 9, 10 and 11 illustrate 3D drawings from different perspectives of a basalt-based profile 100 suitable for being an building element or a board 400, preferably a board for insulating heat/sound, such as a board for wall heat/sound insulation and/or ceiling heat/sound insulation and/or floor sound insulation or an building element for use in constructions for such as a wall, a roof, a ceiling, a floor, insulation or the like.

Said building element or board preferably has the dimension:

$$W: 25\text{-}150\ cm \times H: 0,5\text{-}4\ cm \times L: 1\text{-}3000\ cm.$$

- W = Width
- H = Height
- L = Length

Furthermore, FIG. 9, 10 and 11 illustrate basalt-based profiles 100 with a not 160 at a first side 103 and a protrusion 170 at a second side 104.

Moreover, FIG. 9, 10 and 11 illustrate basalt-based profiles being hollow profiles, with hollow through-holes 140 in the longitudinal direction. It should be understood that the hollow sections 140 of the profiles might have many other alternative shapes/sizes/embodiments. The hollow through-holes might also be positioned in the transverse/cross direction of the profile 100 (not shown).

It should also be understood that the hollow portions 140 do not have to be through-holes.

Furthermore, the hollow portions 140 might in some embodiments be filled with any kind of suitable material that provides a desired property for the profile (not shown).

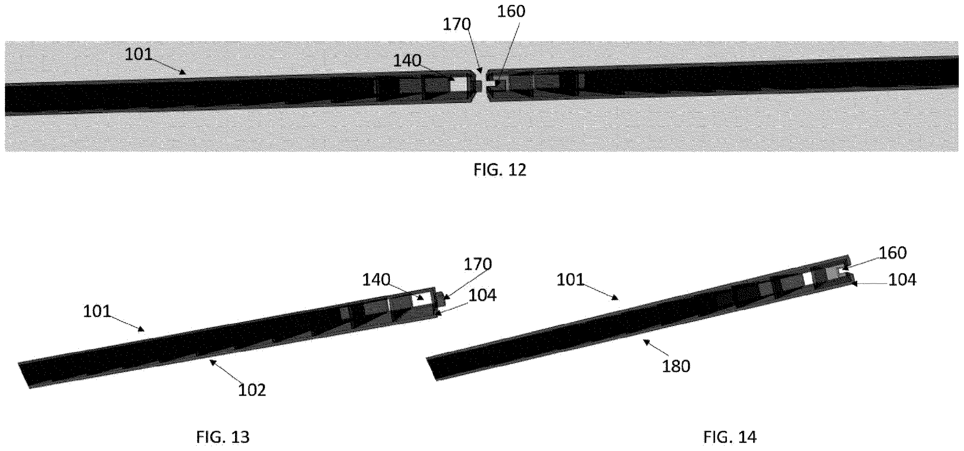

FIG. 12 illustrates an assembling / a connection of two profiles 100 with not 160 and protrusion 170.

The protrusion 170 is dimensioned to fit into the not 160.

Within the context of the invention this assembling can be performed as both a fixed assembling or a disconnectable assembling depending on the configuration of the not and protrusion.

FIG. 13 illustrates an end 105 of a basalt-based profile with a protrusion 170.

FIG. 14 illustrates an end 105 of a basalt-based profile with a not 160.

FIG. 15 illustrates a picture of a real-life basalt-based profile 100. The profile has four through-holes 140 and a not 160 at each side 103, 104. Furthermore, the profile 100 has external grooves 150 on the top surface 101, said grooves being illustrated as longitudinal grooves throughout the entire length of the profile 100. The grooves 150 act as a non-slid purpose. This embodiment of the grooves should not be seen as limiting to the invention, since the grooves 150 can take any desired shape.

Furthermore, a part of an assembling piece 180 is illustrated in FIG. 15.

FIG. 16 illustrates an example of dimensions of a profile 100, wherein the profile is suitable for being a plank 300. However, this is only one of an endless number of potential dimensions of basalt-based profiles within the invention.

The profile example of FIG. 16 has moreover a not 160 on each side 103, 104, four hollow sections 140 and external grooves 150 of the top surface 101.

Figure 17a-c illustrate a simplified version of the basalt-based profile 100. The profile illustrated comprises:

- the main / inner portion of the profile is made of basalt-based fiber(s) 110 and potentially one or more other fiber materials 130, combined with resin 120, and
- a coated layer of polyurethane coating 200.

The thickness of the coating is preferably 0,5-3 mm, more preferably 1,5-2,5 mm, however, the thickness of the coating should not be seen as limiting.

In the context of the present invention, the "coated layer" 200 may be understood such that the layer is applied to at least one surface as in FIG. 17a, preferably more surfaces and/or sides as in FIG. 17b, and in some embodiments the coating is covering the entire profile as in FIG. 17c.

FIG 17a illustrates an embodiment with coating 200 only applied to the top surface 101. FIG. 17b illustrates an embodiment with coating 200 applied to the top surface 101 and the two side 103, 104. The coating 200 could also has been applied only to the sides or one of the sides 103, 104.

FIG. 17c illustrates an embodiment with coating 200 applied to the entire profile 100, both the top 101 and bottom surface 102 and both sides 103, 104 of the profile.

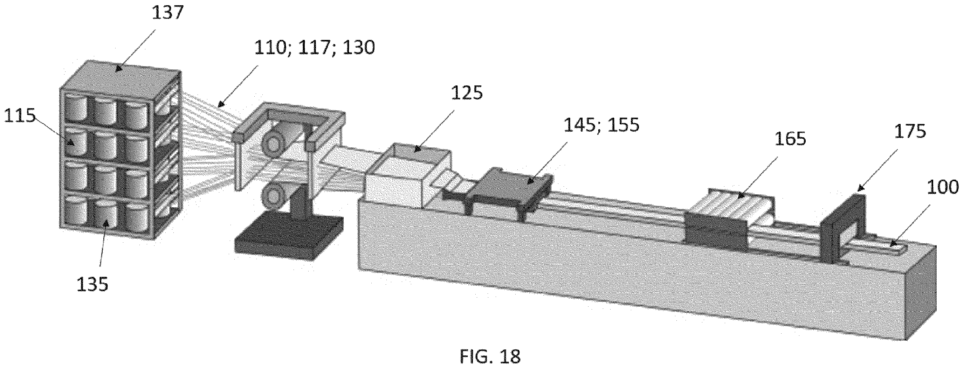

FIG 18 illustrates an example of a method for producing a basalt-based profile.

The method shown comprises the steps:

- Providing basalt-based fiber 110. The basalt-based fiber is in the figure a spun fiber, spanned into a thread 117 provided from a coil 115.
- Potentially providing another fiber material 130 In the FIG. 18, a plurality of coils 135 with a second non-basalt fiber are provided. The coils can be provided from a creel 137.
- Combining the basalt fiber 110 with resin 120, preferably by immersion of the basalt-based fiber into a resin bath 125. Instead of the illustrated resin impregnating bath, the resin can be combined with the basalt-fibers by vacuum suction the resin into the fiber (not shown).
- Inserting the fibers into a mould 145 and heating the basalt-based fiber, preferably in an oven 155 In FIG. 18, the mould is also the oven / heating mould / heating die 155. This is one embodiment but should not be seen as limiting for the invention. The mould and oven can be one combined element or two separate elements.
- Pultruding 165 the basalt-based fiber with a pulling device. In the figure the pulling device is rolls. Instead of pultruding the basalt-based profile also extruding or vacuum infusing or additive manufacturing could be used as a method (not shown).
- Cutting 175 the basalt-based fiber into a profile. As illustrated, this can be done with a cut off saw, however, there are many other ways to cut of the profile in a desired length.
- Coating the profile with polyurethane coating 200 (not shown) and letting the coating dry are the last steps of the manufacturing process. The coating 200 can be applied with e.g. a nozzle, or any other suitable applying method.

When applying the coating 200 to the profile (not shown), it is preferred that it is applied at a pressure at 2000-2400 PSI, most preferably at a pressure about 2200 PSI. However, this pressure range should not necessarily be seen as limiting for the invention. The coating 200 of the profile is applied at a temperature at 50-100 degrees, more preferably at a temperature about 70-74 degrees, most preferably at a temperature of 72 degrees. However, this temperature range should not necessarily be seen as limiting for the invention.

Moreover, 3D printing / additive manufacturing can be used to manufacture the profile 100 (not shown). After the resin is added to the basalt-based fiber, 3D printing the basalt-based profiles is possible, wherein the coating must be applied after the additive manufacturing process.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is not possible and advantageous.

**Claims**

1.  A basalt-based profile (100) comprising:

    - at least one basalt-based fiber (110), preferably a plurality of basalt-based fibers,
    - a resin (120), and
    - a coated layer of polyurethane coating (200).

2.  A basalt-based profile (100) according to any of the preceding claims, wherein the basalt-based fiber (110) is a spun basalt-based fiber, preferably spun into a thread (117).

3.  A basalt-based profile (100) according to claim 2, wherein the spun basalt-based fiber comprises at least two or more types of material (130), wherein the first of the fibers is basalt fibers (110), and preferably the second material is enhancing fibers.

4.  A basalt-based profile (100) according to claim 3, wherein at least one of the at least two types of fiber materials (130) is one or more of:

    - hemp fiber,
    - kevlar fiber,
    - carbon fiber,
    - iron based, and/or
    - glass fibers.

5.  A basalt-based profile (100) according to any of the preceding claims, wherein the majority of the fibers are basalt fibers (110), preferably where 50 - 100% of the fibers are basalt fibers, more preferably where 75-100% of the fibers are basalt fibers, more preferably 90-100% of the fibers are basalt fibers, most preferably 95-100% of the fibers are basalt fibers.

6.  A basalt-based profile (100) according to any of the preceding claims, wherein said profile is made of 100% basalt-fibers (110).

7.  A basalt-based profile (100) according to any of the preceding claims, wherein said basalt-based profile comprises at least one hollow portion (140), preferably an internal hollow portion, and more preferably a plurality of internal hollow portions.

8.  A basalt-based profile (100) according to any of the preceding claims, wherein the profile comprises at least one longitudinal hollow through-hole (140), preferably a plurality of through-holes, more preferably 2-6 through-holes, most preferably 4 through-holes.

9.  A basalt-based profile (100) according to claim 7, wherein at least one of the hollow portions comprises a filling, such as insulation material or residual material.

10. A basalt-based profile (100) according to any of the preceding claims, wherein the profile comprises at least one exterior groove (150), preferably a plurality of exterior grooves and/or preferably one or more longitudinal exterior grooves.

11. A basalt-based profile (100) according to any of the preceding claims, wherein the profile comprises a not (160) or a recess (165) for allowing one or more profiles to be assembled, said not or recess being positioned at least at one of the longitudinally sides (103,104) of the profile,
preferably the profile further comprise:

  - a protrusion (170) at the opposite longitudinally side of the not or the recess,
  - an associated assemble piece (180) for assembling two profiles comprising a not or a recess at the two longitudinally sides of the profile.

12. A basalt-based profile (100) according to any of the preceding claims, wherein the profile at least has the properties:

  - chemical resistance being in class C3, C4, C5-I or C5-M,
  - tension resistance border lengthwise being at least 300 MPa, preferably 370-400 MPa,
  - tension resistance border crosswise being at least 40 MPa, preferably 50-60 MPa,
  - elastic modules being at least 25 GPa, preferably 30-35 GPa,
  - density being 1.8-2.1 $kg/m^3$, preferably 1.95 $kg/m^3$,
  - basalt amount in mass being 50-100%, preferably 65-75%,
  - weight being 2-10 kg/m,
  - load being 200-550 $kg/m^3$, preferably 500 $kg/m^2$.

13. A basalt-based profile (100) according to any of the preceding claims, wherein the coating (200) at least has the properties:

  - hardness being 60-95 HB, preferably 88-90 HB,
  - density being 65-75, preferably 70 $kg/m^3$,
  - tensile strength being minimum 15.8 MPa,
  - abrasion resistance being maximum 0.3% per 1000 cycles,
  - elongation being minimum 125%,
  - tear strength being minimum 400 pli,
  - moisture vapor transmission being 0.025-0.030 MILS.

14. A basalt-based profile (100) according to any of the preceding claims, wherein the profile is a plank (300), such as a plank for a terrace, for a floor, for a building-facade, for a roofing and/or for a footbridge, wherein said plank preferably has the dimension:

  -

W: 10-40 cm x H: 0,5-4 cm x L: 1-3000 cm.

15. A basalt-based profile (100) according to any of the preceding claims, wherein the profile is a building element (400) for the construction of a building, such as being a wall element, a roof element, a ceiling element, a floor element, an insulation element, wherein said building element preferably has the dimension:

  -

W: 25-150 cm x H: 0,5-20 cm x L: 1-3000 cm.

16. A method of manufacturing a basalt-based profile, preferably a profile (100) according to claim 1, wherein the method comprises the steps:

  - providing basalt-based fiber (110), preferably from a coil (115),
  - combining the basalt fiber with resin (120), preferably by immersion of the basalt-based fiber into a resin bath (125) or vacuum suction the resin into the fiber,
- inserting the fibers into a mould (145),
- heating the basalt-based fiber, preferably in an oven (155) or a heating-mould (155),
- pultruding, extruding, vacuum infusing, or additive manufacturing the basalt-based fiber,
- cutting the basalt-based fiber into a profile,
- coating the profile with polyurethane coating (200),

wherein the steps of the method can be executed in any order and/or executed simultaneously.

**17.** A method of manufacturing a basalt-based profile according to claim 16, wherein the method further comprises the step of:

- providing a second non-basalt fiber material (130), preferably from a coil (135).

**18.** A method of manufacturing a basalt-based profile according to claim 16, wherein the coating (200) of the profile is applied:

- at a pressure at 2000-2400 PSI, most preferably at a pressure about 2200 PSI, and/or
- at a temperature at 50-100 degrees, more preferably at a temperature about 70-74 degrees, most preferably at a temperature of 72 degrees.

FIG. 1

FIG. 2

FIG. 3

FIG. 4

100:

100:

300:

300:

FIG. 5

FIG. 6

FIG. 7

EP 4 442 928 A1

FIG. 8

FIG. 11

FIG. 9

FIG. 10

FIG. 12

FIG. 13

FIG. 14

EP 4 442 928 A1

FIG. 15

FIG. 16

FIG. 17a

FIG. 17b

FIG. 17c

FIG. 18

EP 4 442 928 A1

Europäisches
Patentamt

European
Patent Office

Office européen
des brevets

# EUROPEAN SEARCH REPORT

Application Number

EP 23 16 6562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/392742 A1 (WANG FUYOU [CN] ET AL) 17 December 2020 (2020-12-17) * paragraphs [0071], [0106], [0109]; figures 5, 7 * ----- | 1-6, 12-15 | INV. E04F15/10 B29C44/32 B29C70/86 B29C70/08 |
| Y | US 2020/224433 A1 (FELTON COLIN [US] ET AL) 16 July 2020 (2020-07-16) * paragraphs [0048], [0050], [0058], [0068]; figure 2 * ----- | 1,5-18 | |
| Y | WO 2008/088815 A1 (ADVANCED BUILDING COMPOSITES L [US]; BAKER CHARLES H [US] ET AL.) 24 July 2008 (2008-07-24) * paragraph [0100]; figure 3 * ----- | 1,5-18 | |

TECHNICAL FIELDS
SEARCHED      (IPC)

E04F
B29C

The present search report has been drawn up for all claims

| Place of search | Date of completion of the search | Examiner |
|---|---|---|
| Munich | 22 September 2023 | Fournier, Thomas |

EPO FORM 1503 03.82 (P04C01)

## ANNEX TO THE EUROPEAN SEARCH REPORT
## ON EUROPEAN PATENT APPLICATION NO.

EP 23 16 6562

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2023

| Patent document cited in search report | Publication date | Patent family member(s) | | Publication date |
|---|---|---|---|---|
| US 2020392742 A1 | 17-12-2020 | CN | 110126170 A | 16-08-2019 |
| | | US | 2020392742 A1 | 17-12-2020 |
| | | WO | 2019154276 A1 | 15-08-2019 |
| US 2020224433 A1 | 16-07-2020 | CA | 3077396 A1 | 04-04-2019 |
| | | EP | 3687777 A1 | 05-08-2020 |
| | | US | 2020224433 A1 | 16-07-2020 |
| | | WO | 2019068003 A1 | 04-04-2019 |
| WO 2008088815 A1 | 24-07-2008 | CA | 2675343 A1 | 24-07-2008 |
| | | US | 2008187739 A1 | 07-08-2008 |
| | | WO | 2008088815 A1 | 24-07-2008 |

EPO FORM P0459

For more details about this annex : see Official Journal of the European Patent Office, No. 12/82